# EUROPEAN PATENT APPLICATION

(11) **EP 1 580 182 A1**
(43) Date of publication of application: **28.09.2005**
(21) Application number: 04002238.6
(22) Date of filing: 02.02.2004
(51) Int. Cl.: C05D 3/02, C05D 5/00, C05F 5/00, C05F 11/00

(54) **Soil activator and production method for the same**

(71) Applicant: Yamamoto, Masaru, Wakayama (JP); Eifuku, Yoshimitsu, Shiga (JP); Miyamura, Koichi, Shiga (JP)
(72) Inventor: Yamamoto, Masaru, Wakayama (JP); Eifuku, Yoshimitsu, Shiga (JP); Miyamura, Koichi, Shiga (JP)
(74) Representative: Koepe, Gerd L.

(57) **Abstract**

A soil activator of the present invention contains soluble state calcium and magnesium. The soluble state calcium refers to calcium in a state of being easily absorbed into plants in the soil and easily moving inside the plants after being absorbed. Such a soil activator maybe provided by heating and stirring a soil activator composition containing food waste, dolomite, and quicklime. Agricultural crops obtained using the soil activator of the present invention have significantly increased calcium content regardless of a kind and a plantation.

## Description

### BACKGROUND OF THE INVENTION

### 1. Field of the Invention

The present invention relates to a soil activator and a production method therefor, and more specifically to a soil activator capable of increasing calcium content in agricultural crops to be obtained and a simple and low cost production method for such a soil activator.

### 2. Description of the Related Art

An increase of calcium content in agricultural crops is heretofore known to provide firm agricultural crops and to increase freshness or storage stability. Such results are likely caused by bonding calcium absorbed by plants with pectin, thereby maintaining and strengthening tissues of cell walls of the agricultural crops. Further, it is known that sugar content or amino acid content would be increased and nitrate nitrogen content, which causes a bitter or harsh taste, would be decreased in the agricultural crops as the calcium content increases.

The calcium content in the agricultural crops does not increase by simply applying lime materials (calcium-containing materials) to the soil. The reason is likely that the calcium easily bonds with phosphoric acid in the soil to form calcium phosphate, which is hardly absorbed by the plants. Even if the calcium is converted into a state which is easily absorbed into the plants to promote absorption of the calcium into the plants, the calcium bonds with an organic acid or phosphoric acid in the plants to form a water-insoluble compound which hardly moves in the plants. Therefore, it is difficult to effectively supply the calcium into the plants to increase the calcium content in the agricultural crops.

In order to solve such problems, development of a mixed fertilizer is attempted to promote the absorption of the calcium into the plants (see JP2000-313687A). However, the mixed fertilizer cannot sufficiently increase the calcium content of the agricultural crops to be obtained. In addition, production of the mixed fertilizer is extremely complex, and both productivity and cost are insufficient.

Therefore, a soil activator capable of increasing the calcium content in the agricultural crops and a simple and low cost production method therefor are strongly desired.

### SUMMARY OF THE INVENTION

The present invention has been made in view of solving the conventional problems described above, and an object of the present invention is therefore to provide a soil activator capable of significantly increasing calcium content in agricultural crops and a simple and low cost production method for such a soil activator.

According to the present invention, a soil activator comprising soluble state calcium and magnesium is provided.

In one embodiment of the invention, the soil activator comprises 2.5 to 3.5 parts by weight of the calcium with respect to 1 part by weight of the magnesium.

In another embodiment of the invention, the soil activator has a pH in a range of 10.5 to 11.5.

According to another aspect of the invention, a production method for a soil activator is provided. The method comprises step A of preparing an organic mixture by stirring food waste at a prescribed temperature; and step B of stirring the organic mixture, dolomite, and quicklime at a prescribed temperature.

In one embodiment of the invention, the step B comprises step B-1 of preparing an intermediate composition by stirring the organic mixture and one of the dolomite and the quicklime at a prescribed temperature; and step B-2 of stirring the intermediate composition and the other of the dolomite and the quicklime at a prescribed temperature.

In another embodiment of the invention, the food waste comprises eggshells, rice bran, and bean curd refuse.

In still another embodiment of the invention, the food waste comprises 3 to 5 parts by weight of the rice bran and 1 to 3 parts of the bean curd refuse with respect to 1 part by weight of the eggshells.

In still another embodiment of the invention, 5 to 18 parts by weight of the food waste and 1 part by weight of the total of the dolomite and the quicklime are stirred in the steps A and B.

In still another embodiment of the invention, 1 part by weight of the dolomite and 0.3 to 0.7 parts by weight of the quicklime are stirred in the step B.

In still another embodiment of the invention, stirring is conducted at 70 to 90°C for 40 to 60 minutes in the step A; stirring is conducted at 70 to 90°C for 60 to 120 minutes in the step B-1; and stirring is conducted at 90 to 130°C for 5 to 20 minutes in the step B-2.

### BRIEF DESCRIPTION OF THE DRAWING

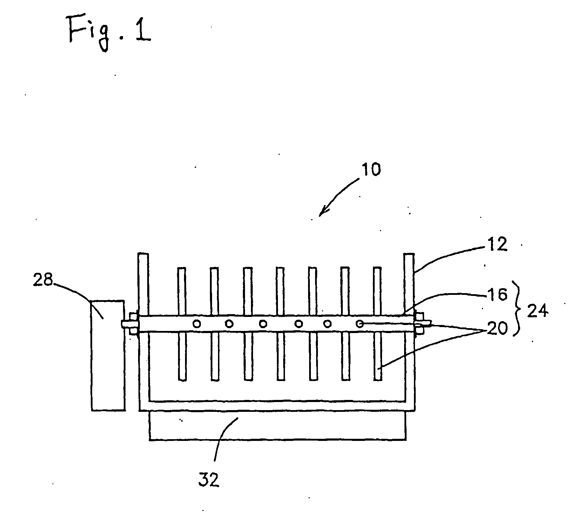

Fig. 1 shows a schematic sectional view of a stirrer used in a production method for a soil activator according to a preferred embodiment of the present invention.

### DETAILED DESCRIPTION OF THE PREFERRED EMBODIMENTS

A soil activator of the present invention contains soluble state calcium and magnesium. In the present specification, the term "soluble state calcium" refers to calcium in a state of being easily absorbed into plants and easily moving inside the plants after being absorbed. More specifically, the term refers to the calcium having a chemical structure which inhibits bonding of the calcium with phosphoric acid in the soil, and phosphoric acid and an organic acid in the plants. A chelate structure inhibiting a salt formation reaction may be presumed for such a chemical structure, for example, though not theoretically clarified. Further, the magnesium in the soil activator significantly promotes absorption of the soluble state calcium into the plants. In addition, the soil activator of the present invention includes food waste as one of its raw materials (described below), and the magnesium promotes decomposition of the food waste. The decomposition of the food waste activates aboriginal bacteria (microorganisms or bacteria naturally existing in a soil of plantation) and promotes the absorption of the soluble state calcium into the plants synergistically. This synergetic effect of the soil activator containing the soluble state calcium and the magnesium in combination is an unexpected and excellent effect.

The soil activator of the present invention preferably contains 2.5 to 3.5 parts by weight of the calcium with respect to 1 part by weight of the magnesium. In the present specification, the simple term "calcium" used for a component of the soil activator of the present invention embraces both the soluble state calcium and the calcium not forming the soluble state calcium. Most of the calcium in the soil activator of the present invention likely forms the soluble state calcium. The calcium and the magnesium in the soil activator in such a ratio further promote the absorption of the soluble state calcium into the plants effectively. As a result, calcium content in the plants and in agricultural crops can be significantly increased. If the soil activator contains the magnesium in an amount larger than the above ratio, the absorption of other minerals into plants (eventually agricultural crops) may be inhibited by excess magnesium. If the soil activator contains the magnesium in an amount smaller than the above ratio, sufficient absorption of the soluble state calcium may not be provided in the plants.

The soil activator of the present invention preferably has a pH in a range of 10.5 to 11.5. The soil applied with the soil activator having a pH of such a range has an increased pH of about 8.5 to 9.0 just after application, a pH of about 7.5 about one week after the application, and a pH of about 7.0 about one month after the application. As a result, blue algae or the like preferring a weak alkali environment can effectively proliferate in the soil with the soil activator of the present invention applied. Simultaneously, an activity of mold-decomposing bacteria preferring an acidic environment can be suppressed. Therefore, a vegetation environment of the plants (agricultural crops) can be effectively improved.

Hereinafter, a preferred example of a production method for the soil activator of the present invention will be described.

The soil activator of the present invention may be obtained by heating and stirring a soil activator composition containing the food waste, dolomite, and quicklime. Imparting prescribed thermal energy and kinetic energy under a condition in which the microorganisms or the like in the food waste and the magnesium in the dolomite exist, the soluble state calcium is formed from the calcium derived mainly from the quicklime and the food waste (calcium in a state of being hardly absorbed or hardly moving in the plants), though not theoretically clarified.

A composition of the food waste as a raw material is not particularly limited as long as it is the food waste from general households or restaurants. In other words, a small difference in the composition of the food waste will not have a dominant effect on the formation of the soluble state calcium. The food waste preferably includes materials containing much calcium such as eggshells, rice bran, and bean curd refuse. Using such materials can increase soluble state calcium content in the soil activator to be obtained. Further, such materials are all by-products of food manufacture and can be acquired at low cost, thereby suppressing a production cost of the soil activator. In addition, suchmaterials can be acquired without seasonings (especially, synthetic chemical seasonings), which are added in many cases, thereby allowing an omission of additional steps such as desalination during production of the soil activator and an improvement on productivity thereof. Further, a ratio of the eggshells, the rice bran, and the bean curd refuse contained is preferably 3 to 5 parts by weight of the rice bran and 1 to 3 parts by weight of the bean curd refuse with respect to 1 part by weight of the eggshells. Such a ratio allows a further increase of the soluble state calcium in the soil activator to be obtained. Moreover, the soil activator obtained using such materials contains many nutrients preferred by the microorganisms, thus enabling a further improvement of the vegetation environment of the plants by activating the microorganisms in the soil.

The dolomite is a typical magnesium-containing material (supply source of magnesium) in the industry. Effective absorption of the soluble state calcium into the plants is perceived to result from a function of the magnesium. Therefore, use of the magnesium-containing material as one of the raw materials is extremely important for the production method for the soil activator of the present invention. The quicklime is a typical calcium-containing material (supply source of calcium) in the industry. The calcium may also be supplied from the food waste. However, use of the quicklime, which is a material with a specified calcium content, is preferred for controlling the calcium content in the soil activator to be obtained. The dolomite and the quicklime are collectively referred to as "lime materials" in the present specification.

The lime materials are used in amount of preferably 1 part by weight with respect to 5 to 18 parts by weight of the food waste according to the production method for the soil activator of the present invention. That is, the lime materials are used in a ratio of 1/18 to 1/5 (weight ratio) of the food waste. Using the lime materials in such a ratio allows suppressing the cost of the lime materials while effectively converting the calcium in the lime materials and the food waste into the soluble state calcium. If the ratio of the lime materials is larger than 1/5, much calcium which could not form the soluble state calcium remains in the soil activator. On the other hand, if the ratio of the lime materials is smaller than 1/18, the soluble state calcium content in the soil activator becomes small in many cases. As a result, a large amount of the soil activator must be applied to the soil for sufficiently increasing the calcium content of the agricultural crops.

The lime materials are preferably used in a ratio of 0.3 to 0.7 parts by weight of the quicklime with respect to 1 part by weight of the dolomite. Using the lime materials with such a ratio, the magnesium derived from the dolomite effectively promotes the absorption of the soluble state calcium into the plants. If the dolomite is used in an excess amount, the absorption of other minerals into the plants (eventually agricultural crops) may be inhibited by excess magnesium. If too little dolomite is used, sufficient absorption of the soluble state calcium may not be provided.

Next, a specific production procedure is described. The production method for the soil activator of the present invention includes: step A of preparing an organic mixture by stirring the food waste at a prescribed temperature; and step B of stirring the soil activator composition containing the organic mixture, the dolomite and the quicklime at a prescribed temperature.

The step A is preferably continued until the organic mixture becomes a viscoelastic material substantially having a hardness of an earlobe. Typical conditions providing such a viscoelastic material include a stirring temperature of 70 to 90°C and a stirring time of 40 to 60 minutes.

In the step B, stirring is preferably continued until the soil activator composition has higher viscosity than the organic mixture. Typical conditions providing such a soil activator composition include a stirring temperature of 70 to 130°C and a stirring time of 60 to 120 minutes, after addition of the lime materials. Heating and mixing for a prescribed time provides the soil activator from the soil activator composition. Such a production method simplifies the production steps and reduces production time, thus providing the soil activator at low cost.

Alternatively, in the step B, the lime materials are added in two stages. Adding the lime materials in two stages allows more effective formation of the soluble state calcium. Specifically, in the step B, an intermediate composition is first prepared by adding the dolomite (step B-1), and then the quicklime is added to the intermediate composition to prepare the soil activator composition (step B-2). In the step B-1, stirring is preferably continued until the intermediate composition has higher viscosity than the organic mixture. Typical conditions providing such an intermediate composition include a stirring temperature of 70 to 90°C and a stirring time of 60 to 120 minutes after the addition of the dolomite. In the step B-2, stirring is preferably continued until the soil activator composition becomes a particulate matter (soil activator) having some moisture. Typical conditions providing such a soil activator include a stirring temperature of 90 to 130°C and a stirring time of 5 to 20 minutes after the addition of the quicklime. Heating and stirring in the step B-2 is preferably conducted under conditions in which ammonium hydroxide forms and remains in the soil activator to be obtained.

Alternatively, the order of the lime materials added may be reversed. That is, the dolomite may be added after the quicklime is added. In this case, preferred stirring conditions after the addition of the quicklime include a heating temperature of 90 to 130°C and a stirring time of 10 to 30 minutes. The preferred stirring conditions after the addition of the dolomite include a heating temperature of 90 to 130°C and a stirring time of 5 to 10 minutes.

A heat stirrer preferably used in the steps A and B will be described. Fig. **1** shows a schematic sectional view of an example of such aheat stirrer. The heat stirrer **10** is provided with a stirring tank **12** receiving the above raw materials (food waste or the like), a stirring means **24** including a rotating shaft **16** and rotating rods **20** and stirring the above raw materials, a driving means **28** rotating the rotating shaft **16**, and a burner **32** attached to the stirring tank **12** and heating the raw materials in the stirring tank **12** by heating the stirring tank **12**. A detailed configuration of such an apparatus is disclosed in JP 2000-262265A as a feed-producing machine, and a disclosure of the publication is herein incorporated by reference. According to the present invention, heating and stirring after adding the quicklime is preferred for homogenizing the soil activator to be obtained. However, the burner **32** is not necessarily used if the raw materials in the stirring tank **12** reach the heating temperatures with heat of reaction between water contained in the intermediate composition or the food waste and the quicklime.

Finally, the soil activator obtained in the step B is cooled to normal temperature. A cooling method is not particularly limited. The soil activator is generally cooled by leaving to stand for a prescribed time.

According to such a production method, the soil activator containing sufficient soluble state calcium can be produced in a short time and at low cost. Further, most of the food waste is decomposed through heating and stirring. Therefore, even if the soil activator of the present invention is applied to the soil just after its production, it will not release a strong odor from decay of the food waste or the like. Rather, the decomposed product of the food waste in the soil activator of the present invention is in the form which is capable of activating the aboriginal bacteria. Therefore, the application of the soil activator to the soil promotes proliferation of the microorganisms in the soil and eventually allows an improvement in soil fertility.

Although the soil activator and the production method therefor according to the preferred embodiment of the present invention have been described in detail, the present invention is not limited to the above-described embodiment and other embodiments may be adopted.

For example, the soil activator composition in the present invention may optionally contain any suitable additional components such as animal wastes or fallen leaves. Further for example, the food waste used for the raw materials may include leftover food, vegetable debris, meat, or fish from general households. Using such additional components or raw materials may provide a soil activator containing more nutrients which activate the microorganisms in the soil. If the soil activator composition contains the leftover food or the like, salt contained in the leftover food or the like is preferably removed therefrom. Further, the leftover food preferably contains a large amount of calcium.

Further, the fallen leaves, the leftover food, or the like is preferably added before heating and stirring the food waste and the lime materials. Specific examples of a preferred mode include: a mode of adding the fallen leaves, the leftover food, or the like to the food waste containing the eggshells, the rice bran, and the bean curd refuse; a mode of adding the fallen leaves, the leftover food, or the like to the organic mixture; and a mode of adding the fallen leaves, the leftover food, or the like to an unreacted mixture of the eggshells, the rice bran, the bean curd refuse, the dolomite, and the quicklime.

Further, an amount of the fallen leaves, the leftover food, or the like added is not particularly limited as long as the added materials do not significantly reduce the amount of the soluble state calcium contained in the soil activator. For example, such materials are preferably added in a range of 1/10 to 1/5 (weight ratio) of the total amount of the eggshells, the rice bran, the bean curd refuse, the dolomite, and the quicklime.

The soil activator of the present invention is preferably applicable to any plants (agricultural crops). Typical examples of the agricultural crops to which the soil activator is applicable include rice, wheat, plum, tomato, pear, apple, grape, corn, tea, spinach, Chinese cabbage, and soybean.

Hereinafter, an effect of the present invention will be described.

According to the present invention, the soil activator is obtained by heating and stirring the soil activator composition containing the food waste, the dolomite, and the quicklime under a prescribed condition. Such a soil activator contains the soluble state calcium and the magnesium. The soluble state calcium has extremely large absorbency into the plants (agricultural crops) and mobility inside the plants compared to general calcium. As a result, the agricultural crops obtained using the soil activator of the present invention have a remarkably large calcium content regardless of a kind and a plantation. An increase of the calcium content in the agricultural crops provides firm agricultural crops and a significantly improved taste. Further, sugar content and amino acid content of the agricultural crops can be increased. In addition, storage stability of the agricultural crops improves, thereby extending a transportation distance of the agricultural crops. Further, nitrate nitrogen content in the agricultural crops can be reduced, thus allowing a reduction in a bitter or harsh taste of the agricultural crops.

Further, the soil activator of the present invention creates an excellent vegetation environment by activating the aboriginal bacteria to improve soil fertility instead of applying foreign microorganisms to the soil as the conventional soil activator. Therefore, a problem will not arise in that the vegetation environment drastically changes or the soil becomes poor from adverse effects of the foreign microorganisms. Further, an amount of pesticides used may be drastically reduced by activating the aboriginal bacteria, thereby providing the agricultural crops which are extremely preferable to human body.

Hereinafter, the present invention will be described more specifically by way of examples. However, the present invention is not limited to those examples.

### (Example 1)

An organic mixture was prepared by heating and stirring 50 kg of eggshells, 200 kg of rice bran, and 100 kg of bean curd refuse at 80°C for 50 minutes, using a heat stirrer as shown in Fig. 1 (Minori bacterial fertilizer manufacturing apparatus M-10, manufactured by Minori Sangyo Co., Ltd.). Next, 40 kg of dolomite (available from Shimizu-kogyo) was added to the organic mixture, and the mixture was heated and stirred at 80°C for 100 minutes to prepare an intermediate composition. Then, 20 kg of quicklime (available from Omi Mining Co., Ltd.) was added to the intermediate composition, and the mixture was heated and stirred at 110°C for 15 minutes. The mixture was then left to cool to obtain a soil activator of the present invention.

### (Cultivation Experiment 1-1)

About ten days after application of an appropriate amount of the soil activator obtained in Example 1 to an experimental plot, tomatoes were cultivated in accordance with a general cultivation method. Calcium content and sugar content in 100 g of tomatoes were measured for the tomatoes obtained from the experimental plot. The calcium content was measured using RQ flex (manufactured by Fujiwara Scientific Company Co., Ltd.). The sugar content was measured using sugar content refractometer (model 502132, manufactured by Extech Instruments Corporation). Table 1 shows measurement results together with the calcium content in 100 g of tomatoes according to Standard Tables of Food Composition in Japan (fourth revision edition).

**[Table 1]**

| | Calcium content (mg/100g) | Sugar content |
|---|---|---|
| Experimental plot | 50 | 9.0 |
| Standard Tables of Food Composition in Japan (fourth revision edition) | 9 | - |

As is apparent from Table 1, the calcium content of the tomatoes obtained from the experimental plot using the soil activator of the present invention had about 5. 6-fold amount of the calcium content of conventional and standard tomatoes.

### (Cultivation Experiment 2-1)

Plums were cultivated in accordance with a general cultivation method except that the soil activator obtained in Example 1 was appropriately applied to experimental plots No. 1 to No. 5, respectively. The calcium content in 100 g of plums (pulp) was measured similarly to Cultivation Experiment 1-1 for the plums obtained from the respective experimental plots. For the experimental plot No. 5, the calcium content was measured for 100 g of plums (pulp) obtained after continuing Cultivation Experiment 2-1 for two years. Table 2 shows measurement results together with results of Cultivation Experiment 2-2 described below.

**[Table 2]**

| | | Calcium content (mg/100g) |
|---|---|---|
| Experimental plot | No. 1 | 46 |
| | No. 2 | 50 |
| | No. 3 | 40 |
| | No. 4 | 41 |
| | No. 5 (second year) | 60 |
| Reference plot | No. 6 | 14 |
| | No. 7 | 18 |
| | No. 8 | 16.6 |
| | No. 9 | 20.2 |

### (Cultivation Experiment 2-2)

Plums were cultivated in accordance with a general cultivation method for reference plots No. 6 to No. 9. The calcium content was measured similarly to the method described in Cultivation Experiment 1-1 for the plums obtained from the respective reference plots. The results are shown in Table 2.

The results of Table 2 confirmed that the plums with the highest calcium content obtained from the experimental plots had about 4.3-fold higher calcium content compared to the plums obtained from the reference plots.

Many other modifications will be apparent to and be readily practiced by those skilled in the art without departing from the scope and spirit of the invention. It should therefore be understood that the scope of the appended claims is not intended to be limited by the details of the description but should rather be broadly construed.

## Claims

1. A soil activator comprising soluble state calcium and magnesium.

2. A soil activator according to claim 1, wherein the soil activator comprises 2.5 to 3.5 parts by weight of the calcium with respect to 1 part by weight of the magnesium.

3. A soil activator according to claim 2, wherein the soil activator has a pH in a range of 10.5 to 11.5.

4. A production method for a soil activator comprising:
step A of preparing an organic mixture by stirring food waste at a prescribed temperature; and either
step B of stirring the organic mixture, dolomite, and quicklime at a prescribed temperature, and optionally
cooling the soil activator obtained to normal temperature, or
step B-1 of preparing an intermediate composition by stirring the organic mixture and one of the dolomite and the quicklime at a prescribed temperature; and
step B-2 of stirring the intermediate composition and the other of the dolomite and the quicklime at a prescribed temperature; and optionally
cooling the soil activator obtained to normal temperature.

5. A production method for a soil activator according to claim 4, wherein the food waste comprises eggshells, rice bran, and bean curd refuse, preferably wherein the food waste comprises 3 to 5 parts by weight of the rice bran and 1 to 3 parts of the bean curd refuse with respect to 1 part by weight of the eggshells.

6. A production method for a soil activator according to claim 4 or claim 5, wherein 5 to 18 parts by weight of the food waste and 1 part by weight of the total of the dolomite and the quicklime are stirred in the steps A and B / B1 + B2; and/or wherein 1 part by weight of the dolomite and 0.3 to 0.7 parts by weight of the quicklime are stirred in the step B / steps B1 + B2.

7. A production method for a soil activator according to any of claims 4 to 6, wherein:
stirring is conducted at 70 to 90 °C for 40 to 60 min in the step A; and/or
stirring is conducted at 70 to 130 °C for 60 to 120 min in the step B; or
stirring is conducted at 70 to 90 °C for 60 to 120 min in the step B-1; and
stirring is conducted at 90 to 130 °C for 5 to 20 min in the step B-2.

8. Use of the soil activator of any of claims 1 to 3 for increasing the calcium content and/or sugar content and/or amino acid content in agricultural crops and/or for increasing the storage stability of agricultural crops, preferably by applying the soil activator to and/or into soil in/on which said agricultural crops are grown and/or are to be grown.

9. A method for promoting the growth of agricultural crops, wherein a soil activator of any of claims 1 to 3 is applied to and/or into soil in/on which said agricultural crops are grown and/or are to be grown.

10. A method for activating aboriginal soil microorganisms and/or for promoting a proliferation and/or growth of aboriginal soil microorganisms, wherein a soil activator of any of claims 1 to 3 is applied to and/or into soil in/on which said microorganisms are to be activated and/or their proliferation and/or growth is to be promoted.
